# EUROPEAN PATENT APPLICATION

(11) **EP 2 144 272 A1**
(43) Date of publication of application: **13.01.2010**
(21) Application number: 07730499.6
(22) Date of filing: 19.03.2007
(51) Int. Cl.: H01J 31/50, H04N 5/235

(54) **SYSTEM FOR ARTIFICIALLY IMPROVING CONTRAST FOR DISPLAYING IMAGES**

(71) Applicant: Muñoz Leo, José, 45600 Talavera De La Reina (ES)
(72) Inventor: Muñoz Leo, José, 45600 Talavera De La Reina (ES)
(74) Representative: Pons Ariño, Angel
(86) International application number: PCT/ES2007/070059
(87) International publication number: WO 2008/113872

(57) **Abstract**

The invention relates to a system for artificially improving contrast for displaying images, formed by at least: a light source which emits short light pulses in the form of a divergent beam, a catadioptric or optical device which forms an output image from the light reflected by the objects illuminated by the source, a device which selectively blocks the system image output for pre-determined time intervals, and an electronic scanning and synchronisation device which controls the moments at which the light pulses are emitted and the time intervals during which the system image output is blocked, in order to select a distance range in which the objects located therein appear enhanced or with the contrast thereof enhanced in the image obtained.

## Description

### FIELD OF THE INVENTION

The present invention refers to a system for enhancing contrast in observation systems that use two-dimensional light sensors such as television cameras (TV) or the human eye itself. It allows for extending the ranges of detection and identification of objects or personnel under adverse observing conditions as it avoids or significantly reduces the loss of contrast and quality of observed images caused by degrading effects arising from the presence of intense spotlights, reflecting surfaces, or light scattering layers in the observed scene. It also allows, by using an auxiliary external illumination source, for artificially modifying the contrast among objects in the image, thus increasing the detection and identification ranges as compared with conventional observation systems.

### BACKGROUND OF THE INVENTION

The ability to detect or identify targets during the observation of scenes with conventional optical instruments or closed-loop television systems, results highly interesting for application in several different fields such as civil protection, rescue, military and police operations scientific research, etc. At difference with observation systems based thermal imaging cameras, where targets in a scene -objects or personnel- emit detectable radiation, visualizing non-emitting targets with TV systems based on near infrared, or shorter wavelength sensors, requires partial reflection by targets or other objects in the scene towards the observation system of the light emitted by some illumination source either natural or artificial. The same situation takes place when visualization is made with a human eye assisted by conventional lens-based optical instruments. The capacity to detect and identify objects with these conventional observation systems gets limited under low luminance conditions. In this cases adding an image intensifier to the observation system, such as those used in passive night vision systems, improves visualization and allows for extending the ranges of detection and identification. When the objects in the observed scene do not receive enough illumination, it becomes also possible to illuminate with an auxiliary artificial source in order to receive more light reflected by the objects, thus improving the signal-to-noise ratio regardless of whether the system includes an image intensifier or not. On the other hand, in situations where the scene to be observed includes intense spotlights as well as passive targets a large -not always available- dynamic range is required in the detector, in order to avoid a contrast loss among objects in the vicinity of the spotlight due to saturation of the camera sensors or image intensifier. The detection and/or identification ranges reduce then. A resource in this case consists in attenuating the signal level on the detector thus avoiding saturation in the detector by using filters, reducing the auxiliary illumination level, or by other alternative means. In so doing, the light received in the sensor from weakly illuminated objects gets significantly diminished, thus reducing the signal-to-noise ratio and making non-discernible those objects which received light is close to or under the noise equivalent power of the system.

Another adverse situation takes place when an object mimics with its surroundings, making its detection or identification difficult, if not impossible.

Presently, for military operations, research is in progress both for improving mimic uniforms and for screening the heat emitted by personnel or vehicles. Research is currently in progress to apply diffractive techniques for thermal radiation screening, based on a similar principle as that used by some types of butterflies to change the color of their wings without involving pigments.

A mimic uniform that would also avoid heat emission outside, would allow for hiding targets to observation systems based on thermal imaging cameras as well as to conventional observation systems.

The presence of partially reflecting placed between the observation system and some object in the scene represents also an adverse observing condition in many cases. When the illumination of the object to observe must go through the partially reflecting surface, the observation system receives simultaneously and spatially overlapped with the object being even indiscernible against the background of light reflected by the surface.
The same situation arises when the light reflected by the object superimposes to a background of light reflected by a light scattering layer, such as smoke, fog , hard rain, or for example superimposed to the light coming from fire placed between the observation system and the object.

It becomes then necessary to introduce improvements in conventional observation systems that would increase their detection and identification ranges under adverse conditions, or would allow for visualizing thermally screened targets undetectable with observation systems based on thermal imaging cameras.

The system here disclosed covers this need to a great extent.

### BRIEF DESCRIPTION OF THE INVENTION

The system here disclosed serves in an optimal manner to improve the detection and identification ranges for objects or personnel when observed with a conventional optical system or a close-loop television system under adverse conditions where observation with conventional optical or thermal systems becomes difficult or impossible.

According to the invention, the system is based on the combination of pulsed illumination and a device that inhibits image formation and comprises, at least, the following elements:
- A source of pulsed light, ideally a laser or a light emitting diode. The short-duration illumination pulses are emitted as a divergent beam in a solid angle, in order to transiently illuminate the objects placed within said solid angle. A fraction of the illuminating pulse gets reflected towards the observation system by the objects placed within the illumination solid angle.
- An optical or catadioptric assembly which receives the light reflected by the illuminated objects and forms their image. Ideally, this assembly will have a variable focal length which can be controlled by means of electrical motors or other means, thus allowing for focusing at a variable distance and allowing for depth of field control.
- A device which selectively inhibits the output of images from the observation system. This device should enable an output image only during determined time intervals. It can be an optoelectronic , electro-optic or acousto-optic device, or a liquid-crystal based device. Preferably, inhibiting will be accomplished with an optoelectronic image-transferring device comprising a two-dimensional photosensitive sensor and a luminescent or electroluminescent screen. The optical assembly will focus the image of on the sensor where an electrical signal carrying information of the image will be generated. Regardless of its internal mechanisms this device will generate a replica on the screen of the image focused on its sensor. The image displayed on the screen can be viewed either with the naked eye, through an eyepiece, or picked up by a TV camera and displayed on a monitor. In particular using an image intensifier as the image inhibiting device provides the advantage of luminance gain in the observation system
- An electronic unit for exploration and system synchronism which controls the instants of the illumination pulse emissions and their optical energy, and which after an adjustable time delay triggers the enabling of images for an also adjustable time interval in order to control a range of distances where the reflecting objects placed within said range will appear in the image, and avoiding any reflection from objects placed outside the range of distances set by the time delay and time interval described. In this way, the image of the illuminated objects placed within the right range of distances set by the time delay and the time interval will appear surrounded by a black background in the image, with their contrast enhanced. By means of a suitable exploration using different values of time delay and time interval, information can be obtained about objects placed at different planes, and the system receives enough information to create a three-dimensional representation of the objects placed within the illumination solid angle. It then becomes possible to learn the individual distance to the observation system of the objects by means of electronic processing.

Having described the basic operation of the disclosed system it proceeds to describe the following variations that would improve its characteristics:

The output image can be picked-up by an electron tube TV camera, or by a solid-state camera comprising a two-dimensional CCD or CMOS sensor, and then displayed on a TV monitor. An electronic unit can be added to improve the image generated in the camera prior to displaying it on the monitor in order to improve the image quality or to emphasize some characteristics of interest for detection and identification of objects, such as edge enhancement , smoothing, additional contrast enhancement, setting a threshold level, etc.

### BRIEF DESCRIPTION OF THE DRAWINGS

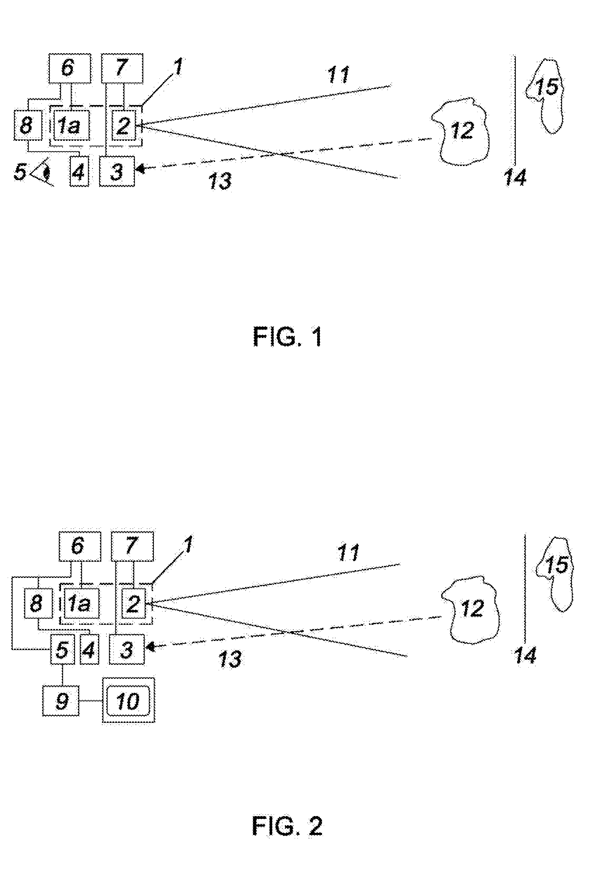

Figure 1 shows schematically the disclosed system when using a human eye as the final sensor.
Figure 2 shows schematically the disclosed system when using a TV camera as the final sensor and a monitor to display the images.

### DETAILED DESCRIPTION OF AN EXEMPLARY PREFERRED EMBODIMENT OF THE INVENTION

Once described the disclosed system and its main components we proceed to describe a practical realization of it.

The disclosed system is constituted by an illumination source 1 which emits short duration pulses in a divergent beam. The illumination source comprises a laser 1a which generates the short duration illumination pulses in a highly collimated beam, and a aiming/expanding optical assembly 2 . The collimated laser beam is incident on the optical assembly 2 which introduces divergence in the illumination beam and allows for controlling both the amount of divergence and the aiming direction of the illumination beam 11. This is accomplished with a suitable assembly of movable lenses or mirrors, with their positions controlled by means of electrical motors. Alternatively, an assembly of lenses having refractive characteristics that can be modified with an electric signal. In both cases, the system will include a control unit 7 for the optical assembly 2.

When a part of the illumination beam reaches an object 12 placed within the illuminated solid angle 11, a fraction of light 13 of the illumination pulse is reflected towards an optical assembly 3 that forms an image of the object or objects illuminated. This optical assembly comprises a set of lenses resulting in a variable focal length, like a zoom or a telephoto, that allows to adjust the focusing distance of the assembly and its depth of field. This is accomplished with electrical motors that modify the relative positions of the lenses within the assembly by means of electrical motors or by using optical elements with refractive characteristics that can be altered via an electric signal. In both cases the system will include the control of the optical assembly 3 in the electronic unit 7.

The image formed by this assembly is focused on the photocathode of an image intensifier tube 4 which creates a replica of the image on its phosphor screen. This image from the screen can be considered as an output image and can be directly visualized with the naked eye 5 in drawing 1, or be passed through an eyepiece to provide a more relaxed visualization. The image intensifier tube will perform as the inhibiting device. The output image will remain inhibited most of the time by maintaining a reverse bias -opposite to that required for normal operation- in the photocathode. In this way, the photoemission process required for image formation during normal operation of the image intensifier remains inhibited for a time interval. Normal bias is then reestablished for a short time interval by means of an electronic control unit 6 which controls the timing and synchronism of the system. During the time intervals when photoemission is enabled, an image is transferred from the photocathode to the screen accompanied by an adjustable gain in luminance, characteristic in this kind of devices. For increasing the gain, an intensifier which comprises at least one microchannel plate inside is preferred because besides providing additional gain, it allows for overall gain control through control of the bias voltage of the plate. The electrodes of the photocathode need to be externally accessible in order to establish the photoemission enabling/inhibiting processes (gating) , and the power supply of the intensifier must incorporate an external connection to control its gain. In order to switch the photocathode biasing, which involves high voltage signals, an electronic unit 8 in drawings 1 and 2 will be preferably added to the system, this unit being commercially available (gating unit) by means of a low-voltage control signal. The rise time for switching the photocathode on/off will affect the ability of the observation system for range discrimination. A rise time not exceeding 5 nanoseconds should be preferred. In order to observe scenes where personnel is present, it is convenient that the photocathode of the image intensifier has a good quantum efficiency in the infrared spectral range considered eye-safe, allocated above 1500 nanometers. In this way, the illumination source can be made to emit intense light pulses in the same spectral range without representing a potential hazard risk for the eyes of the personnel situated within the illumination field of the system. The persistence of the phosphor screen of the image intensifier needs to be neither too short nor too long. Because the system may operate sometimes with enabled image transmission intervals of a few nanoseconds, a certain amount of persistence would help in keeping the eye or camera receiving a signal for a longer time. On the other hand, a long persistence time will limit the speed of response of the system for moving objects. A good compromise is achieved with a P43 phosphor in the screen of the intensifier, which has a characteristic decay time (persistence) of around one millisecond. Moreover, the peak emission in this kind of phosphor takes place at in the green spectral range, which is advantageous when observing the screen by a human eye, or to pick-up the image with a silicon-based solid-state camera which sensitivity peak normally matches this spectral range.

The use of an image intensifier presents the additional advantage of providing a high gain and a low noise figure. Therefore it may perform in an optimal manner as a first amplifying stage concerning the final noise figure of the complete should more amplifier stages be added, according to the well-known Friis formula.

Alternatively, as already mentioned above, the image generated on the screen of the intensifier can be transferred to a TV camera 5 in drawing 2, either by means of optical coupling or by means of a coherent fiber optic bundle composed of a high number of individual fibers. In this last case, is convenient that the output window of the intensifier be of the fiber-optic kind. The electrical signal generated in the camera can be directly displayed on a TV monitor 10 in drawing 2, or alternatively be introduced into an electronic processing unit 9 in drawing 2 prior to be sent to the monitor, or even to introduce simple processing functions that ease detection and recognition such as border enhancement, quantification of the luminance in discrete levels, setting a luminance threshold, inverse video, etc.

The electronic synchronism unit 6 in drawings 1 and 2 includes a timing clock (time base) of 50 or 60 cycles/second, in order to guarantee an unnoticeable blinking of the image, and to make it compatible with standard video and TV systems. The clock signal will trigger the emission of the illumination pulses in a periodic manner, one per clock cycle. Unavoidably, a small delay -typically a few hundred microseconds- will result between the leading edge of the illumination trigger pulse and the actual emission of the light pulse. Internal to this unit, there is a delay unit (not explicitly) represented in the drawings) which receives the clock signal from the time base and generates a new version of the periodic clock signal with a voltage level suitable to control the gating unit 8, and with a delay and duty cycle that can be adjusted by the user of the observation system. If the range of distances to be observed with the system should start at zero distance from the observation system, the minimum delay in the modified clock signal must match the one needed to trigger the actual emission of the illumination pulse and the effective enabling of photoemission to occur at the same instant. The adjustable value for the delay will determine the minimum value of the closest object to the system that can be visualized. The adjustable duty cycle will then determine the maximum distance for which the system will be able to visualize objects. Therefore, the minimum and maximum distances of observation can be user selected.

Thanks to the inhibiting action of the image intensifier and to the pulsed character of the illumination source, the transmission of an image to the final sensor element (eye or TV video camera ) can be controlled so that the light received in the sensor corresponds only to light reflected by the objects placed within a range of distance to the system comprised between c xTe/2 and (Te+ΔT) xc/2,where c stands for the speed of light, Te for the time interval elapsed between the emission of the illumination pulse and the enabling of the image intensifier, and where ΔT is the time interval in which internal image transmission is enabled in the image intensifier. The factor 2 in the formulas accounts for the go-return path that requires the illumination to travel to the object, be reflected, and then travel back again to the system. In order to perceive a continuous observation with no appreciable blinking, either with an eye or with a camera, the illumination source will emit pulses in a periodic manner, with a convenient (although not necessary) minimum pulse repetition rate of 25 cicles/second. The pulse repetition frequency of the illumination pulses (fr in what follows) will be the clock frequency at which the system will operate, and will be provided by a suitable electronic time base for a correct synchronism in the system.

In this manner, the passing of the image through the intensifier will also take place in a periodic manner, during the ΔT time intervals. The distance D between the system and the nearest observed plane will then be determined by D= c xTe/2, and the depth of the illuminated field PC -distance between the nearest and farthest planes observed by the system- will be PC=c xΔT/2. The light emitted by the source which is reflected by the objects or scattering media located outside the range of distances D+PC will find its way through to the system sensor inhibited.

If the objects in the scene to be observed reflect light coming from an illumination source external to the system, or if any of the objects emits light itself towards the system, a total inhibition of this light reaching the sensor cannot be accomplished and it will contribute to the image with an integrated power (energy) of Pm x ΔT , with Pm being the mean power received in the system during the time interval ΔT.

The system here disclosed, has the particularity of being able, though a suitable choice of Te and ΔT , of forming an image on the system sensor of a very narrow range of distances, and located at a specific distance from the system, thus discriminating the objects that fall outside a selected range of distances to the observation system. This ability allows for a considerable increase in detection and identification of objects in the disclosed system as compared with other conventional observation systems.

According to the former description, if a small value of ΔT is selected, a constant or slowly varying intensity spotlight pointing to the system with an average light intensity power value Pe the sensor will receive a mean power also constant or slowly varying of value Pe x ΔT x fr. For example, if ΔT =40 ns and fr = 25 cycles/second, the mean optical power received on the sensor from the spotlight would be one million times lower than the one it would receive if operating in a continuous way. As a result the spotlight will be seen by the system with an apparent intensity one million times lower than its real intensity, opposite to what would happen in any other conventional observation system. Under normal circumstances conventional light sources would hardly produce saturation of the sensor in the disclosed system, nor the associated loss of contrast. This same attenuation factor would result for the light reflected by the objects observed and which are illuminated by a typical non-pulsed external light source.

On the other hand, pulsed laser sources can emit very intense light pulses concentrated in very short time intervals. Continuing with the former example, an object of similar size and form of the spotlight, located at the same distance to the system, and illuminated with 40 nanoseconds pulses by the system laser source, would need to reflect towards the sensor a mean power similar to that of the spotlight during the time interval ΔT to appear as bright to the system as when illuminated with the spotlight. This represents in general a very low energy in the laser pulse. If we denote with P_{IR} the power reflected towards the observation system by an object illuminated with the pulsed laser light of said system, then the total light (luminous energy) received in the system during the time interval ΔT, corresponding to the exemplified object will be Po =(P_{R}+P_{IR}) x ΔT, where P_{R} represents the average power of the external or ambient illumination light reflected by the object towards the system (or emitted by the object in case of being a spotlight). Taking into account that in a scene uniformly illuminated by the laser P_{IR}=P_{B}+R, where P_{B} is the pulsed light received by the object and R its reflection coefficient for the system illumination, and given that P_{B} is in general much higher than P_{R} , the system will operate with similar performance under daytime and nighttime (P_{R} =0) ambient illumination, and the image formed in the system will essentially match the two-dimensional distribution of the reflection coefficient of the objects at the system laser wavelength.

On the other hand, the effective reflection coefficient can be made zero for objects placed outside the range of distances associated to ΔT, appearing in the image as darkness, thus improving the contrast among the edges of the objects placed within ΔT and those that don't, therefore easing their detection and identification. In the same way, any object placed closer to the system that the distance at which interval ΔT starts, will appear as a shadow in the image, also easing its detection and shape identification.

When an object (target in what follows) is placed in front of other objects of similar reflection coefficient, and one of the edges (or them all) that limit the target is viewed against a background formed with those other objects a mimic or camouflage situation results. With a suitable choice of the value of Te, so that its value is adjusted for the observation distance where the target is placed, the reflection of the objects that mimic the target can be inhibited, and the target edges will appear well defined against a dark background. It is also possible to adjust Te to the distance where the farther away objects which help for camouflage of the target are located. In this case, the light reflected by the farther objects will be seen in the image, but with a shadow due to the light blocked by the target, thus being discernible the shadow of the target in the image.

It is also possible to visualize through a partially reflecting surface 14 in drawings 1 and 2, behind which the target 15 in both drawings is located. Effectively, because the surface is only partially reflecting, it will reflect light towards the system but it will also transmit a portion of the laser illumination light aiming at the target which will continue to propagate, reach the target, and be backreflected towards the system . Part of that light reflected by the target will make its way back through the surface 14.

## Claims

1. System for artificial enhancement of contrast in image visualization; **characterized** because it comprises, at least, an illumination source which emits short duration light pulses in a divergent beam, an optical or catadioptric imaging assembly which creates an output image of the objects illuminated by the source, a device which selectively enables/inhibits the formation of an output image in the system during determined time intervals, an electronic unit for exploration and system synchronism which controls the instants at which formation the image is inhibited in order to select a range of distances where objects placed within said range will appear highlighted in the image, or with their contrast enhanced.

2. System for artificial enhancement of contrast in image visualization according to claim 1; **characterized** because the illumination source providing the divergent beam is either a laser or a light emitting diode, where said illumination source emits light pulses of less than 30 nanosecond duration, together with an aiming/expanding assembly of the light beam generated by the illumination source.

3. System for artificial enhancement of contrast in image visualization according to claim 2; **characterized** because the for aiming/expanding the illumination beam comprises either a lens-based optical system or a catadioptric system, where said expanding/aiming system elements can vary their relative position by means of electronically controlled electrical motors, or in which the refractive characteristics of the lenses can be varied by means of an electric signal in order to adjust the divergence and aiming direction of the illumination beam.

4. System for artificial enhancement of contrast in image visualization according to claim 1; **characterized** because the optical or catadioptric assembly that forms the image of the illuminated objects in a set of lenses and has a variable focal length (zoom or telephoto) that allow for adjusting the focusing distance and depth of focus by means of electrical motors or by, and consists in a set of lenses varying the refractive characteristics of the lenses with an electric signal.

5. System for artificial enhancement of contrast in image visualization according to claim 1; **characterized** because the device which enables/inhibits the formation of an output system image is an optoelectronic, electro-optic or acousto-optic device, or a liquid-crystal based device.

6. System for artificial enhancement of contrast in image visualization according to claim 5; **characterized** because the optoelectronic device comprises a two-dimensional photosensitive and a two-dimensional luminescent screen and where the output image of the system generates on said luminescent screen as a result of focusing on the device sensor the image formed by the optical/catadioptric imaging assembly.

7. System for artificial enhancement of contrast in image visualization according to claim 6; **characterized** because the device which selectively enabes/inhibits an output image from the system is either an image intensifier tube such as those commonly employed in night vision systems, or a cascaded assembly of more than one image intensifier.

8. System for artificial enhancement of contrast in image visualization according to claims 1, 5, 6 and 7; **characterized** because the output image from the system is picked-up by means of a TV video camera and displayed on a monitor.

9. System for artificial enhancement of contrast in image visualization according to claim 8; **characterized** because optionally, the electric video signal generated in the TV camera is electronically processed prior to being displayed on the monitor.

10. System for artificial enhancement of contrast in image visualization according to claim 2; **characterized** because the illumination source is a laser which emits light with a wavelength equal or longer than 1500 nanometers, allocated within some region of the infrared spectrum considered as eye-safe for the human eye.

11. System for artificial enhancement of contrast in image visualization according to claim 7; **characterized** because the image intensifier tube is of the kind labeled as "extended infrared response" and operates efficiently in a spectral range of wavelengths above 1500 nanometers.

12. System for artificial enhancement of contrast in image visualization according to claims 7 and 11; **characterized** because the screen of the image intensifier has a preferred persistence of a few milliseconds.

13. System for artificial enhancement of contrast in image visualization according to claim 12; **characterized** because the screen of the image intensifier uses a P43 phosphor.

14. System for artificial enhancement of contrast in image visualization according to claims 7 and 8; **characterized** because the coupling of an image between the image intensifier tube and the camera takes place by electron bombardment on the sensor elements of the camera, thus integrating the image intensifier and the camera sensor in a single device.

15. System for artificial enhancement of contrast in image visualization according to claim 7; **characterized** because the image intensifier includes inside, at least, a microchannel plate which increases the gain of the image intensifier and allows for controlling said gain by means of controlling the bias voltage of said microchannel plate/s.

16. System for artificial enhancement of contrast in image visualization according to claims 1 and 7; **characterized** because the exploration/synchronism unit includes elements to control timing and synchronism in the system, and an element that allows for on/off switching of the image intensifier.
